Europäisches Patentamt

European Patent Office

Office européen des brevets

(11) Publication number: **0 035 891**
**B1**

## EUROPEAN PATENT SPECIFICATION

(45) Date of publication of patent specification: **29.05.85**

(21) Application number: **81300950.3**

(22) Date of filing: **06.03.81**

(51) Int. Cl.⁴: **F 16 J 15/34,** F 16 C 33/72,
F 04 D 29/12

(54) Face seal system.

(30) Priority: **10.03.80 US 129080**

(43) Date of publication of application:
**16.09.81 Bulletin 81/37**

(45) Publication of the grant of the patent:
**29.05.85 Bulletin 85/22**

(84) Designated Contracting States:
**AT BE CH DE FR GB IT LI LU NL SE**

(56) References cited:
**DE-U-1 931 040
DE-U-7 047 470
US-A-2 589 631
US-A-3 278 191
US-A-3 494 679
US-A-3 689 083
US-A-4 157 834**

(73) Proprietor: **THE GARRETT CORPORATION
9851-9951 Sepulveda Boulevard P.O. Box 92248
Los Angeles, California 90009 (US)**

(72) Inventor: **Laham, Herman, C.
2631 West 232nd
Torrance California (US)**

(74) Representative: **Arthur, George Fitzgerald et al
KILBURN & STRODE 30, John Street
London WC1N 2DD (GB)**

Courier Press, Leamington Spa, England.

## Description

This invention relates to a face seal system. More specifically, this invention relates to an improved face seal system particularly designed for co-operation with a thrust bearing system in a turbocharger for sealing passage of a turbocharger shaft through a wall.

In a turbocharger, a turbine wheel and a compressor impeller are carried on a common shaft. The turbine wheel is received within a turbine housing for communication with exhaust gases from an engine, whereby the shaft is rotatably driven during engine operation. The shaft is supported by suitable journal bearings and thrust bearings within a centre housing connected between the turbine housing and a compressor housing receiving the compressor impeller. The exhaust gas driven turbine wheel thereby drives the compressor impeller to compress charge air for supply to the intake of the engine, all in a well-known manner.

Typically, the rotating shaft in a turbocharger is capable of being driven at relatively high rotational speeds, such as on the order of about 100,000 RPM or more. Such rotational speeds require the use of precision bearing components together with an effective system of bearing lubrication. In this regard, lubricating oil is commonly pumped under pressure to the turbocharger centre housing for lubricating the shaft bearings to prevent excessive bearing heating and wear.

The effective lubrication of turbocharger shaft bearings without leakage of oil from the centre housing, particularly into the compressor housing, has long been a troublesome problem in the design of turbochargers. Specifically, during normal operation of the turbocharger, localised fluid pressure in the region between the back side of the compressor impeller and the backplate wall separating the centre housing from the compressor housing is frequently less than the fluid pressure within the centre housing. Thus, a substantial pressure differential is created tending to cause oil leakage from the centre housing around the rotating shaft and into the compressor housing. This leakage tendency is substantially enhanced by the high rotational speed of the shaft causing relatively rapid wear of sealing components such as seal rings and the like.

A wide variety of seal systems have been proposed for sealing passage of the turbocharger shaft through the backplate separating the centre and compressor housings of the turbocharger. Some of these systems include various seal ring arrangements intended to block oil leakage through the shaft passage. See, for example, U.S. Patent Nos. 3,077,296, 2,953,416, 2,785,022, 2,362,667, and 2,054,219. However, these systems are not totally satisfactory in that the seal rings tend to exhibit relatively high rates of wear resulting in premature leakage. Other arrangements have included slingers and the like in an attempt to move oil away from the region of the leakage path. See, for example U.S. Patent Nos. 3,494,679, and 4,157,834. However, these systems also are not altogether successful in eliminating leakage in commercial turbochargers. Still other systems have been proposed including the incorporation of cartridge-type pressure-responsive seal assemblies into the shaft passage between the compressor housing and centre housing. See, for example, U.S. Patent No. 2,393,944. However, these systems introduce into the turbocharger an additional and undesirable leakage path around the outer diameter of the seal cartridge.

An object of the present invention is to provide a face seal system in which the problems and disadvantages of the prior art are overcome and which is quickly and easily mounted directly into the wall separating the turbocharger compressor and centre housing, and including means for varying sealing forces in response to the pressure differential across the said wall to limit seal wear.

In accordance with the invention, a seal system for sealing passage of a rotatable shaft through an opening formed in a wall separating regions subject to differential fluid pressures, in which the wall has in it an axially open annular recess bounded at its radially inner extent by an axially extending tubular flange concentrical about the shaft, the system comprising a generally annular seal member received axially in the recess and including a seal face for sealing engagement with respect to the shaft spring means in the recess for urging the seal face of the seal member into sealing engagement with respect to a collar for rotation with the shaft; means on the wall for preventing rotation of the seal member with the shaft; an annular resilient seal ring concentrically between the seal member and the flange for preventing passage of fluid therebetween, and passage means communicating the pressure in the first region to the axial side of the seal member opposite the seal face; is characterised in that the communicated pressure assists the action of the spring when the pressure in the first region is greater than that in the second region, and opposes the action of the spring when the pressure in the first region is less than that in the second region, in that the collar rotates with the shaft and co-operates with a thrust bearing located in relation to the wall and in that the spring means comprise an annular thrust washer in bearing engagement with one axial end of the seal member and a spring under compression between the thrust washer and the wall.

Preferably the spring comprises a relatively low rate helical spring having a generally conical cross section for compression substantially into a single plane.

In one arrangement the seal member has an axially elongated slot in its periphery, and the rotation preventing means comprises a radially inwardly projecting anti-rotation lug on the wall for registering with the said seal member slot. Thus the spring means may comprise an annular thrust washer in bearing engagement with one axial end of the seal member and a spring under compression between the thrust washer and the wall, the said thrust washer having in its periphery a slot for registering with the anti-rotation lug. The anti-rotation lug may be axially spaced from the portion of the wall engaged by the spring, the thrust washer being inserted into the recess past the lug, and then turned so that the lug axially retains the thrust washer within the recess.

While not limited thereto, the system is particularly applicable in a turbocharger, for sealing passage of the turbocharger shaft where it passes through a compressor backplate separating a turbocharger centre housing from a compressor housing.

Further features and details of the invention will be apparent from the following description of one specific embodiment that will be given by way of example with reference to the accompanying drawings, in which:—

FIGURE 1 is a fragmented vertical section of the compressor end of a turbocharger showing a face seal system of this invention;

FIGURE 2 is an enlarged fragmented vertical section of a portion of FIGURE 1; and

FIGURE 3 is a fragmented vertical section taken along the line of 3—3 of FIGURE 2 with portions broken away.

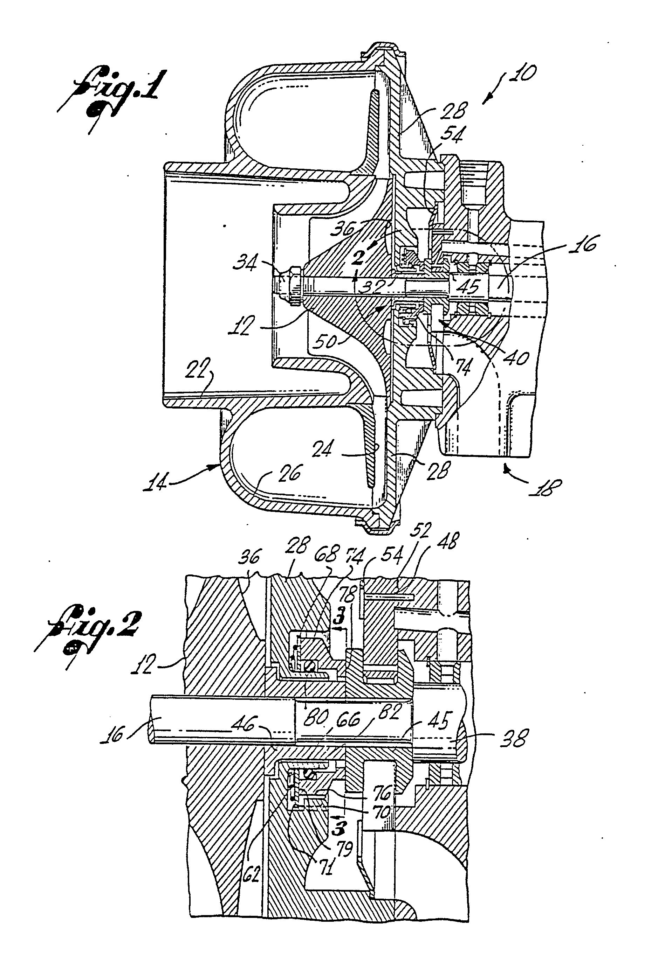

A portion of a turbocharger 10 is shown in FIGURE 1 and comprises a compressor impeller 12 carried on a rotatable shaft 16 within a compressor housing 14. The shaft 16 extends from the impeller 12 through a turbocharger centre housing 18 for connection to a turbine carried within a turbine housing (not shown). In operation, exhaust gases from an internal combustion engine are supplied to the turbine (not shown) to rotatably drive the turbine, and thereby also rotatably drive the turbocharger shaft 16. Such driving causes corresponding rotation of the impeller 12 within the compressor housing 14 serving to draw air through a compressor inlet 22 for compression, and discharge through a diffuser 24 and an outlet volute 26 to the intake (not shown) of an internal combustion engine.

As shown in FIGURE 1, the centre housing 18 and the compressor housing 14 are separated by a common wall, or compressor backplate 28. The shaft 16 extends through the centre housing 18, and further through a central passage 32 in the compressor backplate 28 to the compressor housing 14. The compressor impeller 12 is received over one end of the shaft 16 within the compressor housing 14, and is suitably secured as by a nut 34 for rotation therewith. Importantly, the back side 36 of the impeller 12 is axially spaced slightly away from the backplate 28 so as to avoid contact therewith during impeller rotation.

During rotation of the impeller 12, air is compressed within the compressor housing 14 whereby a superatmospheric pressure prevails around the periphery of the impeller. However, it is well known that localised pressure between the back side 36 of the impeller 12 and the compressor backplate 28 may vary significantly from the superatmospheric pressure at the periphery of the impeller. Moreover, it is known that such localised pressure is highly dependent upon the specific operating conditions of the turbocharger. For example, pressure in the vicinity of the backplate shaft passage 32 may vary between a superatmospheric pressure at relatively high speed impeller rotation to a subatmospheric pressure at relatively low speed impeller rotation, such as during engine idling conditions. Since the pressure within the centre housing is normally near atmospheric pressure for all conditions of turbocharger operation, potential exists for leakage of fluid such as lubricating oil from the centre housing 18 through the shaft passage 32 and into the compressor housing 14 whenever the centre housing pressure is the larger pressure. That is, the pressure differential through the passage 32 may function during at least some periods of turbocharger operation to pump lubricating oil from the centre housing 18 into the compressor housing 14. When this occurs, it is necessary to provide a sealing system to prevent the leakage of oil through the backplate shaft passage 32.

As shown in the drawings, a face seal system 50 of this invention is incorporated into the compressor backplate 28 within the centre housing 18, and reacts between the backplate 28 and a thrust bearing system 40 carried about the turbocharger shaft 16. More specifically, the thrust bearing system 40 is provided for controlling undesirable axial excursions of the shaft 16, and thereby functions to locate precisely the axial positions of the compressor impeller 12 and the turbine (not shown) within their respective housings. The thrust bearing system 40 comprises a thrust collar 45 snugly received over the shaft 16 for rotation therewith at a position abuttingly between an enlarged shaft portion 38 and a bushing-shaped spacer 46 interposed between the impeller 12 and the thrust collar 45. Importantly, the thrust collar 45 has a radially outwardly open, generally U-shaped cross section for reception of a horseshoe-shaped thrust bearing 48. As shown, this bearing 40 is retained axially between a wall 52 of the centre housing 18 and an annular spring member 54, all in a well-known manner and as specifically described in U.S. Patent No. 4,157,834.

The face seal system 50 comprises a helical compression spring 62 having a relatively low spring rate received within a recess formed within the backplate 28 and opening axially toward the interior of the centre housing 18. The recess defines an annular flange 66 formed concentrically about and slightly spaced with respect to the spacer 46, and extending axially into the centre housing toward the thrust collar 45. Moreover, the backplate 28 includes a plurality of anti-rotation lugs 70 projecting radially inwardly into the recess to form a relatively small annular undercut 71 for reception and positioning of the seal system 50, as will be described in more detail.

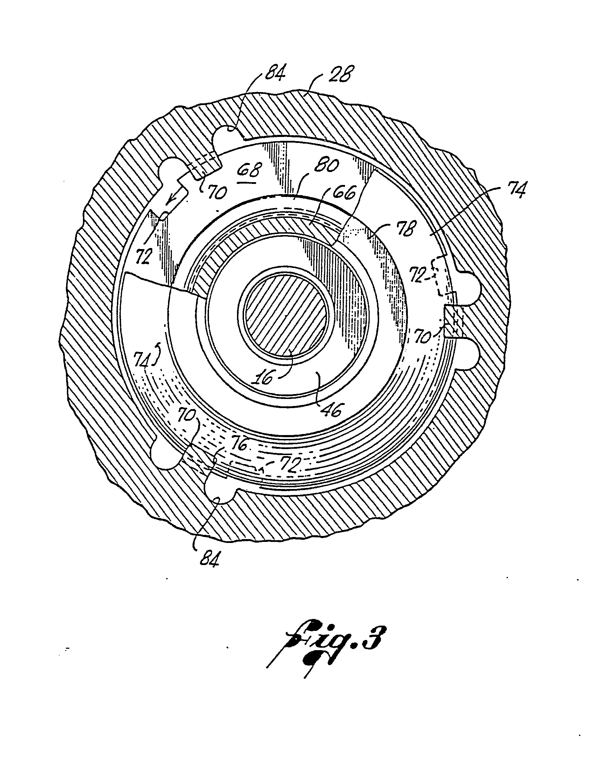

A thrust washer 68 includes at its periphery a plurality of slots 72 circumferentially arranged for registry with the anti-rotation lugs 70 on the centre housing back-plate 28. The thrust washer 68 is thus receivable past the anti-rotation lugs 70, and is indexable with respect to the lugs 70 as illustrated in FIGURE 3 for reception within the recess 64 and retention therein by the lugs 70. As shown, the spring 62 biases the thrust washer 68 axially to the right as viewed in FIGURE 2 in engagement with the anti-rotation lugs 70. Conveniently, the spring 62 is formed to have a conical cross section so as to have its coils compressible substantially into a single plane.

A seal member 74 has a generally annular shape, and is formed from a suitable sealing composition such as carbon or the like. The seal member 74 includes about its periphery a plurality of slots 76 configured for registry with the anti-rotation lugs 70. The seal member 74 is thus received concentrically about the flange 66 with its slots 76 axially receiving the lugs 70 to prevent rotation of the seal member. The seal member 74 includes an axially presented seal face 78 for bearing and sealing engagement with the rotating thrust collar 45 mounted on the shaft 16. The seal member also includes an opposite axially presented face 79 for bearing engagement with the thrust washer 68. Importantly the axial length of the seal member 74 is chosen such that the spring 62 urges the thrust washer 68 into engagement with the face 79 of the seal member 74, which correspondingly urges the sealing face 78 of the seal member 74 into sealing engagement with the thrust collar 45.

An annular resilient seal ring 80 such as an O-ring, is interposed radially between the backplate flange 66 and the seal member 74 to seal against passage of fluids therebetween. Moreover, this seal ring 80 is axially positioned between the thrust washer 68 and a radially stepped shoulder 82, formed on the inner diameter of the seal member 74. The thrust washer 68 and the seal ring 80 combine to adjust the sealing force between the seal face 78 and the thrust collar 45. More specifically, as shown, the spring 62 normally biases the thrust washer 68 against the rear face 79 of the seal member 74 to urge the seal face 78 against the thrust collar 45. When pressure within the centre housing 18 is relatively high, this pressure is communicated to the recess 64 by lobed passages 84 adjacent the anti-rotation lugs 70 to urge the thrust washer 68 axially against the seal member 74 with increased force. This pressure also urges the resilient seal ring 80 against the shoulder 82 to form a positive seal between the non-rotating seal member 74 and the flange 66. Accordingly, fluid leakage from the centre housing past the seal face 78 or the resilient ring ring 80 is prevented.

When the pressure within the compressor housing 14 adjacent the shaft passage 32 is relatively high with respect to pressure within the centre housing 18, the relative pressures acting upon the resilient seal ring 80 urge said ring axially against the thrust washer 68 to counteract at least some of the axially applied spring force. When this happens, total forces urging the seal face 78 axially against the thrust collar 45 are substantially reduced. This prevents undue wear of the seal member 74 and its seal face 78 during operating conditions of the turbocharger when the relative pressure differential across the shaft passage 32 is sufficient to prevent oil leakage.

The present invention thus provides a pressure compensating face seal system which is quickly and easily mounted directly within the backplate of a turbocharger. The system includes a seal member of a high quality seal material such as carbon. Potential leakage between the seal member and the non-rotational backplate is prevented by a resilient seal ring. Potential leakage between the seal member and rotating components is prevented by a seal face which is variably force-loaded depending upon turbocharger operating characteristics. Since the seal system is mounted directly within the compressor backplate 28, no other leakage path is present.

Various modifications and improvements of the invention described herein are believed to be possible to one skilled in the art. However, no limitation of the invention is intended by way of the above description except as set forth in the appended claims.

## Claims

1. A seal system for sealing passage of a rotatable shaft through an opening in a wall (28) separating first and second regions (18, 14) subject to differential fluid pressures, in which the wall has in it an annular recess axially open towards the first region (18) and bounded at its radially inner extent by an axially extending tubular flange (66) concentrical about the shaft; the system comprising a generally annular seal member (74) received axially in the recess and including a seal face for sealing engagement with respect to the shaft; spring means (62) in the recess for urging the seal face of the seal member into sealing engagement with respect to a collar (45) for rotation with the shaft; means (70) on the wall for preventing rotation of the seal member with the shaft; an annular resilient seal ring (80) concentrically between the seal member (74) and the flange (66) for preventing passage of fluid therebetween, and passage means (84) communicating the pressure in the first region (18) to the axial side of the seal member opposite the seal face; characterised in that the communicated pressure assists the action of the spring when the pressure in the first region is greater than that in the second region, and opposes the action of the spring when the pressure in the first region is less than that in the second region, in that the collar (45) rotates with the shaft and co-operates with a thrust bearing (48) located in relation to the wall (28) and in that the spring means comprise an annuar thrust washer (68) in bearing engagement with one axial end of the seal member (74) and a spring (68) under compression between the thrust washer and the wall.

2. A system as set forth in Claim 1 in which the seal face comprises an axially presented face for sealing engagement with the collar (45), the spring means (62) being interposed between the wall and the seal member (74) for urging the latter member axially away from the wall toward the collar (45).

3. A system as set forth in Claim 1 or Claim 2 wherein the spring (62) comprises a relatively low rate helical spring having a generally conical cross section for compression substantially into a single plane.

4. A system as set forth in any one of the preceding claims wherein the seal member (74) has an axially elongated slot in its periphery, and the rotation preventing means comprises a radially inwardly projecting anti-rotation lug (70) on the wall for registering with the said seal member slot.

5. A system as set forth in Claim 4 wherein the thrust washer has in its periphery a slot for registering with the anti-rotation lug (70).

6. A system as set forth in Claim 5 wherein the anti-rotation lug (70) is axially spaced from the portion of the wall engaged by the spring (62) and the thrust washer can be inserted into the recess past the lug, and then turned so that the lug axially retains the thrust washer within the recess.

7. A system as set forth in any one of Claims 4—6 wherein the seal member (74) includes a plurality of axially elongated slots about its periphery, and the rotation preventing means comprises a corresponding plurality of radially inwardly projecting anti-rotation lugs (70) on the wall and aligned for registering with the seal member slots.

8. A seal system as set forth in any one of the preceding claims including an axially inwardly directed annular shoulder formed on the seal member (74) the resilient seal ring (80) being axially positioned between said spring means and said shoulder.

9. A system as set forth in any one of the preceding claims including passage means communicating the pressure in the second region (14) to the side of the seal ring at the axially open side of the recess.

10. A system as claimed in any one of the preceding claims in a turbocharger, for sealing passage of the turbocharger shaft where it passes through a compressor backplate separating a turbocharger centre housing from a compressor housing.

## Revendications

1. Système d'étanchéité, pour obturer le passage d'un arbre (16) tournant à travers une cloison (28) qui sépare deux zones (18, 14) où se trouvent des fluides à des pressions différentes; cette paroi étant pourvue d'un logement ouvert dans le sens axial, en regard de la première zone (18), et limité radialement sur son pourtour par une paroi tubulaire (66) orientée axialement et coaxiale à l'arbre; ce système comportant un organe d'étanchéité sensiblement en forme de bague (74), qui est monté axialement dans le logement, et qui est pourvu d'une face d'appui adaptée à coopérer de manière étanche avec l'arbre; des moyens élastiques (62) étant prévus dans le logement, pour pousser la face d'appui de la bague d'étanchéité (74) en contact étanche contre une bague de réaction (45), tout en permettant la rotation de l'arbre; la cloison portant des moyens pour empêcher la rotation de la bague d'étanchéité; un joint annulaire élastique (80) étant monté de manière coaxiale entre la bague d'étanchéité (74) et la paroi annulaire (66, pour empêcher un passage de fluide entre ces deux organes; et une communication (84) étant prévue pour transmettre la pression de la première zone (18) à la face de la bague d'étanchéité (74) qui est axialement opposée à la face d'étanchéité de cette bague; le système étant caractérisé en ce que l'effet de la pression ainsi transmise s'ajoute à l'effort de poussée des moyens élastiques (62), lorsque la pression qui règne dans la première zone (18) est supérieure à la pression de la deuxième zone (14); en ce que l'effet de la pression transmise contrarie l'effort de poussée des moyens élastiques (62), lorsque la pression de la première zone (18) est inférieure à celle de la deuxième zone (14); en ce que la bague de réaction (45) tourne avec l'arbre (16), et coopère avec un palier de butée (48) qui est fixe par rapport à la cloison de séparation (28); et en ce que les moyens élastiques (62) comportent une rondelle de poussée (68), en appui sur une extrémité axiale de la bague d'étanchéité (74), et un ressort (62) qui travaille en compression entre la rondelle de poussée (68) et la cloison de séparation (28).

2. Système selon la revendication 1, caractérisé en ce que la face d'appui est constituée par une face frontale, adaptée à s'appliquer de manière étanche dans le sens axial contre la bague de réaction (45); les moyens élastiques (62) étant montés entre la cloison de séparation (28) et la bague d'étanchéité (74), pour pousser celle-ci dans le sens axial vers la bague de réaction (45), en l'écartant de la cloison de séparation (28).

3. Système selon l'une des revendications 1 ou 2, caractérisé en ce que les moyens élastiques (62) comportent un ressort hélicoïdal de forme sensiblement conique, à caractéristique relativement plate, adapté à s'écraser sensiblement dans un seul plan.

4. Système selon l'une des revendications 1 à 3, caractérisé en ce que le bague d'étanchéité (74) comporte en périphérie au moins une fente (72), orientée dans le sens axial; et en ce que le système comporte un dispositif de blocage en rotation, constitué par au moins un doigt anti-rotation (70) solidaire de la cloison de séparation (28), et en saillie radiale sur celle-ci en direction de l'axe de l'arbre, avec un agencement tel que chaque doigt anti-rotation (70) correspond à chaque fente (72) de la bague détanchéité (74).

5. Système selon la revendication 4, caractérisé en ce que la rondelle de poussée (68) comporte en périphérie au moins une encoche qui correspond à un doigt anti-rotation (70) solidaire de la cloison de séparation.

6. Système selon la revendication 5, caractérisé en ce que le doigt anti-rotation (70) est écarté dans le sens axial, par rapport à la partie de la cloison de séparation (28) sur laquelle repose le ressort (62); et en ce que la rondelle de poussée (68) est prévue pour pouvoir être introduite dans le logement du ressort (62) en franchissant le doigt anti-rotation (70), et pour pouvoir être ensuite tournée d'un certain angle, pour se trouver retenue dans le logement par le doigt (70).

7. Système selon l'une des revendications 4 à 6, caractérisé en ce que la bague d'étanchéité (74) comporte en périphérie plusieurs fentes (72) orientées dans le sens axial, et en ce que le dispositif de blocage en rotation comporte plusieurs doigts anti-rotation (70), en saillie radiale sur la paroi, en direction de l'axe de l'arbre, et dont l'emplacement correspond aux fentes (72) de la bague d'étanchéité (74).

8. Système selon l'une des revendications 1 à 7, caractérisé en ce que la bague d'étanchéité (74) comporte un épaulement interne (82), et en ce que le joint annulaire élastique (80) est retenu dans le sens axial entre les moyens élastiques (62) et l'épaulement interne (82) de la bague d'étanchéité (74).

9. Système selon l'une des revendications 1 à 8, caractérisé en ce qu'il comporte des moyens de mise en communication pour transmettre la pression de la seconde zone (14) au côté du joint annulaire (80) qui est disposé axialement en regard de l'ouverture du logement.

10. Système selon l'une des revendications 1 à 9, caractérisé en ce qu'il est utilisé dans un turbo-compresseur, pour obturer d'une manière étanche le passage de l'arbre du turbo-compresseur à travers une plaque arrière du compresseur, qui sépare le carter central du turbo-compresseur du carter du compresseur.

**Patentansprüche**

1. Abdichtungssystem zum Abdichten des Durchlasses für eine rotierende Welle durch eine Öffnung in einer Wand (28) zur Trennung von ersten und zweiten Zonen (18, 14), welche unterschiedlichen Strömungsmitteldrücken ausgesetzt sind, welche Wand eine ringförmige Ausnehmung besitzt, welche axial gegen die erste Zone (18) hin offen und an ihrem radial inneren Bereich durch einen axial erstreckten rohrförmigen, konzentrisch um die Welle angeordneten Flansch (66) begrenzt ist, wobei das System ein im allgemeinen ringförmiges Dichtelement (74) aufweist, welches axial in der Ausnehmung aufgenommen ist und eine Dichtfläche für einen Dichtkontakt in Bezug zur Welle besitzt, wobei Federungselemente (62) in der Ausnehmung, bestimmt zum Andrücken der Dichtfläche des Dichtelementes in Dichteingriff mit Bezug auf einen Kragen (45) für Mitdrehen mit der Welle vorgesehen sind, ferner Elemente (70) an der Wand zur Verhinderung des Mitdrehens des Dichtelementes mit der Welle, ein ringförmiger elastischer Dichtring (80), konzentrisch zwischen dem Dichtelement (74) und dem Flansch (66) zur Verhinderung des Durchtrittes von Flüssigkeit dazwischen hindurch, sowie Durchlaßelemente (84), welche den Druck aus der ersten Zone (18) zu der der Dichtfläche axial entgegengesetzten Seite des Dichtelementes überleiten, dadurch gekennzeichnet, daß der übergeleitete Druck die Wirkung der Feder unterstützt, wenn der Druck in der ersten Zone größer als jener in der zweiten Zone ist, hingegen der Wirkung der Feder entgegenwirkt, wenn der Druck in der ersten Zone geringer ist als in der zweiten Zone, und daß der Kragen (45) mit der Welle rotiert und mit einem Axiallager (48) zusammenwirkt, welches in bezug auf die Wand (28) angeordnet ist, und daß die Federungselemente eine ringförmige, in Lagereingriff mit einem Axialende des Dichtelementes (74) befindliche Druckscheibe (68) sowie eine zwischen der Druckscheibe (68) und der Wand unter Kompression stehende Feder (62) aufweisen.

2. System nach Anspruch 1, dadurch gekennzeichnet, daß die Dichtfläche eine in Axialrichtung weisende Fläche für Dichtangriff am Kragen (45) aufweist und die Federungselemente (62) zwischen der Wand und dem Dichtelement (74) für ein Drücken des letzteren axial weg von der Wand gegen den Kragen (45) angeordnet sind.

3. System nach Anspruch 1 oder 2, dadurch gekennzeichnet, daß die Feder (62) eine Feder mit verhältnismäßig geringer Federkonstante und einem im allgemeinen konischen Querschnitt ist, für ein Zusammendrücken im wesentlichen in eine einzige Ebene.

4. System nach einem der vorhergehenden Ansprüche, dadurch gekennzeichnet, daß das Dichtelement (74) in seinem Umfangsbereich eine axial verlängerte Nut aufweist und daß die drehungsverhindernden Elemente eine an der Wand angeordnete, radial einwärts vorragende drehungsverhindernde Nase (70) beinhalten, die mit der Nut des Dichtelementes zusammenpaßbar ist.

5. System nach Anspruch 4, dadurch gekennzeichnet, daß die Druckscheibe an ihrem Umfang einen Ausschnitt für Übereinstimmung mit der drehungsverhindernden Nase (70) hat.

6. System nach Anspruch 5, dadurch gekennzeichnet, daß die drehungsverhindernde Nase (70) axialen Abstand von dem von der Feder berührten Teil der Wand hat und daß die Druckscheibe in die Ausnehmung hinter der Nase einsetzbar und dann drehbar ist, so daß die Nase die Druckscheibe axial in der Ausnehmung hält.

7. System nach einem der Ansprüche 4 bis 6, dadurch gekennzeichnet, daß das Dichtelement (74) un seinen Umfang eine Mehrzahl von axial verlängerten Nuten aufweist und daß die drehungsverhindernden Elemente an der Wand eine übereinstimmende Mehrzahl von radial einwärts vorragenden Nasen (70) aufweist, die für Deckung mit den Dichtelementnuten ausgerichtet sind.

8. System nach einem der vorhergehenden Ansprüche, gekennzeichnet, durch eine am Dichtelement (74) ausgebildete, axial einwärts gerichtete ringförmige Schulter, wobei der elastische Dichtring (80) axial zwischen den Federungselementen und der Schulter angeordnet ist.

9. System nach einem der vorhergehenden Ansprüche, gekennzeichnet durch Durchlaßelemente, welche den Druck von der zweiten Zone (14) zu der an der axial offenen Seite der Ausnehmung gelegenen Seite des Dichtringes überleiten.

10. System nach einem der vorhergehenden Ansprüche in einem Turbolader, für die Abdichtung des Wellendurchlasses des Turboladers, wo diese Welle durch eine Verdichter-Rückplatte hindurchtritt, welche ihrerseits ein Turbolader-Zentralgehäuse von einem Verdichtergehäuse trennt.

Fig.1

Fig.2

Fig.3